# EUROPÄISCHE PATENTSCHRIFT

(11) **EP 2 865 478 B1**
(45) Veröffentlichungstag und Bekanntmachung des Hinweises auf die Patenterteilung: **06.12.2017**
(21) Anmeldenummer: 14189140.8
(22) Anmeldetag: 16.10.2014
(51) Int. Cl.: B23K 10/00, B23K 37/02, H05H 1/44

(54) **Brenneraggregat für eine Brennschneidmaschine**
Burner unit for a flame cutting machine
Agrégat de brûleur pour une machine d'oxycoupage

(30) Priorität: 16.10.2013 DE 202013104676 U
(43) Veröffentlichungstag der Anmeldung: 29.04.2015
(73) Patentinhaber: LIND Gesellschaft mbH Industrial Equipment, 61130 Nidderau (DE)
(72) Erfinder: Lind, Torsten, 61130 Nidderau (DE); Lind, Helmut, 61130 Nidderau (DE); Lind, Markus, 61130 Nidderau (DE)
(74) Vertreter: Stoffregen, Hans-Herbert

(56) Entgegenhaltungen:
- EP-A1- 2 647 461
- DE-A1- 2 224 186
- FR-A1- 2 269 398
- FR-A1- 2 332 835
- GB-A- 846 353
- US-A- 3 459 376
- US-A1- 2007 000 894

## Beschreibung

Die Erfindung bezieht sich auf ein Mehrfach-Plasma-Brenneraggregat nach dem Oberbegriff des Anspruchs 1 sowie auf ein Verfahren zur Herstellung eines Kontur- bzw. Phasenschnittes mittels eines Mehrfach-Plasma-Brenneraggregates nach dem Oberbegriff des Anspruchs 12.

Ein Mehrfach-Plasma-Brenneraggregat sowie ein Verfahren zur Herstellung eines Kontur- bzw. Phasenschnittes sind aus der FR 2 332 835 A1 bekannt. Das Mehrfach-Plasma-Brenneraggregat weist eine Brennerhalterung mit einem mittleren Plasma-Brenner, einem zweiten Plasma-Brenner und einem dritten Plasma-Brenner auf. Ein Winkel des zweiten bzw. des dritten Plasma-Brenners kann zur Einstellung einer vorbestimmten Nahtkontur manuell eingestellt werden.

Die DE 2 224 186 A1 betrifft ein Verfahren zum Herstellen von Schweißkanten an zu verschweißenden Werkstücken mit unterschiedlichen Schrägungswinkeln. Bei dem Verfahren kann der Schrägungswinkel der Schweißkante entsprechend der räumlichen Verformung des einen Teils am anderen Bauteil ohne Unterbrechung des Schneidvorgangs maschinell verändert werden.

Die US 3 459 376 A betrifft ein Brenneraggregat und ein Verfahren zur Herstellung eines Kontur- bzw. Phasenschnittes. Das bekannte Brenneraggregat umfasst drei Plasma-Brenner, deren Versorgungsleitungen jeweils von einem Hüllschlauch umgeben sind und wobei die einzelnen Hüllschläuche in einen gemeinsamen Hüllschlauch übergehen. Die einzelnen Plasma-Brenner sind an einem Mehrbrenneraggregat befestigt, mit der Möglichkeit, eine Winkelstellung des Plasma-Brenners bezogen auf eine Werkstückoberfläche per Hand einzustellen.

Die GB 846 353 betrifft ein Mehrfach-Autogen-Brenneraggregat, mit drei Autogen-Brennern, von denen zwei in ihrer Neigung zu einer Oberfläche eines Werkstücks händisch einstellbar sind.

Ein Brenneraggregat mit Plasma-Brenner ist auch in der DE 20 2005 004 423 U1 beschrieben. Bei dieser Ausführungsform weist das Brenneraggregat einen einzigen Plasma-Brenner auf, der entlang einer bogenförmigen Winkelstelleinrichtung mittels eines gelagerten Schlittens verfahrbar ist, so dass ein zwischen einer Längsachse des Plasma-Brenners und der Werkstückoberfläche gebildeter Winkel α einstellbar ist.

Die Winkelstelleinrichtung ist an einem Dreharm angeordnet, der exzentrisch um eine vorzugsweise senkrecht zu der Werkstückoberfläche verlaufende Achse drehbar ist.

Bei der Herstellung von Kontur- bzw. Fasenschnitten mit einer gewünschten Kontur, wie z. B. einer K-Naht, muss der Plasma-Brenner nach dem Stand der Technik dreimal in unterschiedlichen Winkeln an der Naht entlang geführt werden, um die gewünschte Kontur zu schneiden. Nach jedem Schnitt muss der Plasma-Brenner in einen gewünschten Neigungswinkel zur Werkstückoberfläche eingestellt werden, was mit erheblichem Zeit- und Kostenaufwand verbunden ist.

In einer Internetpräsentation "King 4 in 1 Multimaschine", 2009/2010, Url: http://www.lindcutting.de/news/king-4in1-maschine/., der Lind GmbH ist eine Brennschneidanlage beschrieben, mit der insgesamt vier Verfahren wie Bohren, Autogenschneiden, Plasmaschneiden mit Fase und Markieren auf einer Maschine möglich sind. Zum Plasmaschneiden mit Fase ist allerdings nur ein Plasma-Brenner an dem Brenneraggregat angeordnet, wie dies der zuvor diskutierten DE 20 2005 004 423 U1 zu entnehmen ist.

Die DE 103 36 032 A1 bezieht sich auf eine Vorrichtung zum Schneiden oder Schweißen von rohrförmigen Werkstücken. Die Vorrichtung umfasst einen Schneid- oder Schweißbrenner sowie eine Führungseinrichtung für den Schneid- oder Schweißbrenner, die so steuerbar ist, dass der Schneid- oder Schweißbrenner einer vorgegeben Linie folgt.

In der US 5,685,996 B1 ist ein Brenneraggregat mit Plasmabrenner zum Schneiden von Rohren beschrieben. Auch diese Vorrichtung weist nur einen Plasmabrenner auf.
Davon ausgehend liegt der vorliegenden Erfindung die Aufgabe zu Grunde, ein Brenneraggregat der eingangs genannten Art derart weiterzubilden, dass die Bearbeitungszeit für Fasenschnitte reduziert wird.
Die Aufgabe wird erfindungsgemäß durch die Merkmale des Anspruchs 1 gelöst. Das Brenneraggregat weist zur Herstellung eines Kontur- bzw. Fasenschnittes drei gleichzeitig betreibbare Plasma-Brenner auf, mit jeweils einem Schlauchpaket, wobei die Schlauchpakete durch eine entlang der Drehachse in dem Ausleger verlaufende Hohlwelle verdrillbar aufgenommen sind.
Gemäß der Erfindung ist vorgesehen, dass eine Längsachse eines mittleren Plasma-Brenners mit der Drehachse fluchtet und dass ein vorlaufender Plasma-Brenner sowie ein nachlaufender Plasma-Brenner auf einem motorisch verfahrbaren Laufwagen jeweils auf einer bogenförmigen Winkelstelleinrichtung verfahrbar angeordnet sind.

Das Brenneraggregat zeichnet sich gegenüber dem Stand der Technik durch die Merkmale des kennzeichnenden Teils des Anspruchs 1 aus. Der Drei-Plasma-Brenner weist einen ersten, in X-Richtung vorlaufenden Plasma-Brenner, einen zweiten, mittleren Plasma-Brenner sowie einen dritten, nachlaufenden Plasma-Brenner auf.
Die Brennerhalterung selbst ist mittels der Hohlwelle um einen Winkel δ im Bereich von -450° ≤ δ ≤ +450° einstellbar, wobei eine Länge des Schlauchpakets derart eingestellt ist, dass bei einer Verdrillung um +450° bzw. -450° die jeweiligen Schlauchpakete nicht beschädigt werden.

In einer bevorzugten Ausführungsform ist vorgesehen, dass die Schlauchpakete an einem oberen Ende mit der Hohlwelle verbunden sind, so dass eine Verdrillung der Schlauchpakete innerhalb der Hohlwelle ausgeschlossen ist.

Eine weitere bevorzugte Ausführungsform sieht vor, dass die Schlauchpakete nach Verlassen der Hohlwelle mindestens in einer Distanz von 500 mm bis 600 mm einen freien Verlauf aufweisen, d. h., nicht fixiert sind, um eine ungehinderte Verdrillung zu ermöglichen, insbesondere ohne Schlauchpakete zu zerstören.

Um Schnitte verschiedener Konturen in einem einzigen Schnitt herzustellen, ist vorgesehen, dass ein Winkel β zwischen einer Längsachse des ersten Plasma-Brenners und der Drehachse in einem Bereich von 15° ≤ β ≤ 55° einstellbar ist. Entsprechend ist ein Winkel γ zwischen einer Längsachse des dritten Plasma-Brenners und der Drehachse in einem Bereich von 15° ≤ γ ≤ 55° einstellbar.

Des Weiteren ist vorgesehen, dass auch die Längsachse des zweiten Plasma-Brenners mittels einer an der Brennerhalterung montierten Kulisse in einem Winkel α im Bereich von -15° ≤ α ≤ +15° einstellbar ist. Üblicherweise ist die Längsachse des mittleren Plasma-Brenners mit der Drehachse des Auslegers fluchtend ausgerichtet.

Eine weitere Ausführungsform zeichnet sich dadurch aus, dass die Plasma-Brenner, bezogen auf ein mit der Brennerhalterung gekoppeltes X-Y-Z-Koordinatensystem, wobei die Z-Richtung der Drehachse bzw. Mittelachse der Hohlwelle entspricht, in verschiedenen Z-Y-Ebenen angeordnet und einstellbar ist.

Vorzugsweise ist die Winkelstelleinrichtung jeweils in Y-Richtung verfahrbar angeordnet.

Um eine gegenseitige Beeinflussung der Plasma-Brenner sowie eine Beeinflussung der Steuerelektronik und insbesondere eine Verbesserung der EMV-Verträglichkeit zu erreichen, ist vorgesehen, dass die einzelnen Schlauchpakete eine Hochfrequenz-Abschirmung, vorzugsweise eine schlauchförmige HF-Abschirmung aufweisen. Die HF-Abschirmung ist zumindest im Bereich der Hohlwelle vorgesehen.

Des Weiteren ist vorgesehen, dass zur Einstellung eines konstanten Abstandes zwischen einer Austrittsöffnung eines Plasma-Strahls und der Oberfläche des Werkstücks der Brennerhalterung eine Höhenabtastung angeordnet ist.

Weitere Einzelheiten, Vorteile und Merkmale der Erfindung können der nachfolgenden Beschreibung von der Zeichnung zu entnehmenden bevorzugten Ausführungsbeispielen entnommen werden. Es zeigen:
- Fig. 1: eine perspektivische Darstellung eines Brenneraggregates mit drei Plasma-Brennern für eine Brennschneidmaschine,
- Fig. 2: eine Vorderansicht des Brenneraggregates,
- Fig. 3: eine Seitenansicht des Brenneraggregates,
- Fig. 4: eine Draufsicht des Brenneraggregates und
- Fig. 5a), b): die Kontur einer K-Naht sowie eine schematische Darstellung der Plasma-Brenner in Draufsicht.

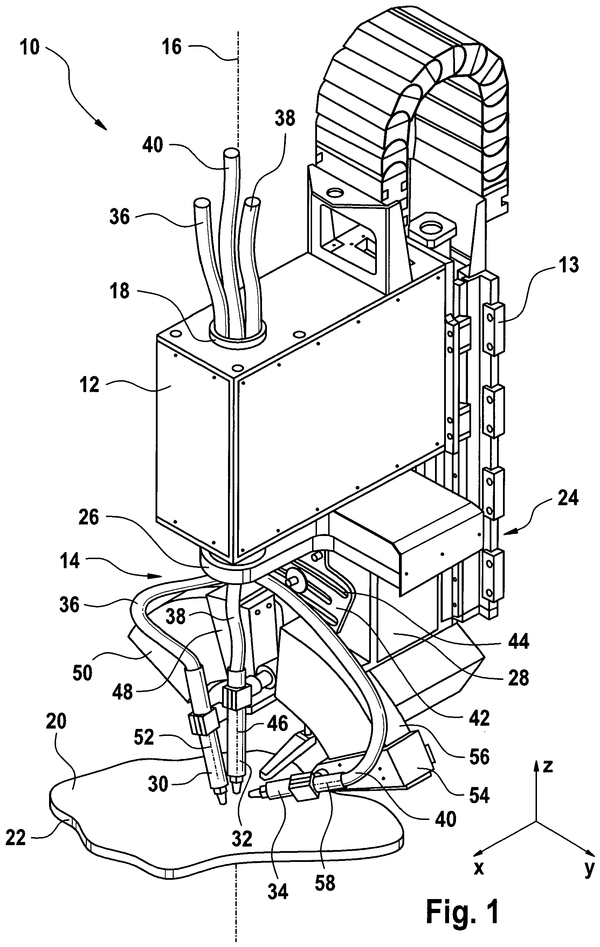

Fig. 1 zeigt ein Brenneraggregat 10 für eine Brennschneidmaschine (nicht dargestellt). Das Brenneraggregat umfasst einen Ausleger 12, der mittels einer Höhenverstelleinrichtung 13, die an einem Querwagen (nicht dargestellt) der Brennschneidmaschine montiert ist, höhenverstellbar ist.

An dem Ausleger 12 ist eine Brennerhalterung 14 exzentrisch um eine Drehachse 16 drehbar gelagert. In dem Ausleger 12 verläuft entlang der Drehachse 16 eine Hohlwelle 18, an der die Brennerhalterung 14 befestigt ist. Die Hohlwelle 18 ist in dem Ausleger 12 gelagert und wird mittels eines in dem Ausleger 12 angeordneten Antriebs (nicht dargestellt) angetrieben. Im dargestellten Ausführungsbeispiel verläuft die Drehachse 16 senkrecht zu einer Oberfläche 20 eines Werkstücks 22.

Die Brennerhalterung 14 umfasst einen L-förmigen Dreharm 24, mit einem horizontal verlaufenden ersten Arm 26, der an der Hohlwelle 18 befestigt ist, und vertikal verlaufenden zweiten Armen 27, 28, 29, an denen erfindungsgemäß jeweils ein Plasma-Brenner 30, 32, 34 montiert sind. Die Plasma-Brenner 30, 32, 34 weisen jeweils ein Schlauchpaket 36, 38, 40 auf, wobei die Schlauchpakete 36, 38, 40 durch die Hohlwelle 18 geführt und mit einer Schneidanlage (nicht dargestellt) verbunden sind.

Der Plasma-Brenner 32 - nachfolgend mittlerer Plasma-Brenner 32 genannt - ist über eine Kulisse 42 mit dem vertikal verlaufenden Arm 28 des Dreharms 24 verbunden. Über Langlöcher 44 kann ein Winkel α einer Längsachse 46 des mittleren Plasma-Brenners 32 gegenüber der Drehachse 16 bzw. der Oberfläche 20 des Werkstücks 22 eingestellt werden. Im Betriebszustand ist die Drehachse 46 des mittleren Plasma-Brenners 32 derart eingestellt, dass diese mit der Drehachse 16 fluchtet.

Um eine gegenseitige Behinderung der Plasma-Brennstrahlen auszuschließen, sind die einzelnen Plasma-Brenner 30, 32, 34 in X-Richtung des Koordinatensystems in verschiedenen Z-Y-Ebenen angeordnet, wobei der Plasma-Brenner 30 als vorlaufender Plasma-Brenner 30, der Plasma-Brenner 32 als mittlerer Plasma-Brenner 32 und der Plasma-Brenner 34 als nachlaufender Plasma-Brenner 34 bezeichnet werden kann, unter der Voraussetzung, dass die Plasma-Brenner 30, 32, 34 beim Schneidvorgang in X-Richtung des Koordinatensystems bewegt werden.

Der vorlaufende Plasma-Brenner 30 ist in der Z-Y-Ebene des Koordinatensystems verschwenkbar angeordnet. Dazu ist der vorlaufende Plasma-Brenner 30 an einem Laufwagen 48 montiert, der entlang einer ersten bogenförmigen Winkelstelleinrichtung 50 verfahrbar angeordnet ist, so dass ein Winkel β zwischen der Drehachse 16 und einer Längsachse 52 des vorlaufenden Plasma-Brenners 30 einstellbar ist.

Des Weiteren ist der nachlaufende Plasma-Brenner 34 an einem Laufwagen 54 montiert, der entlang einer zweiten bogenförmigen Winkelstelleinrichtung 56 verfahrbar ist, so dass ein Winkel γ zwischen der Drehachse 16 und einer Mittelachse 58 des nachlaufenden Plasma-Brenners 34 einstellbar ist.

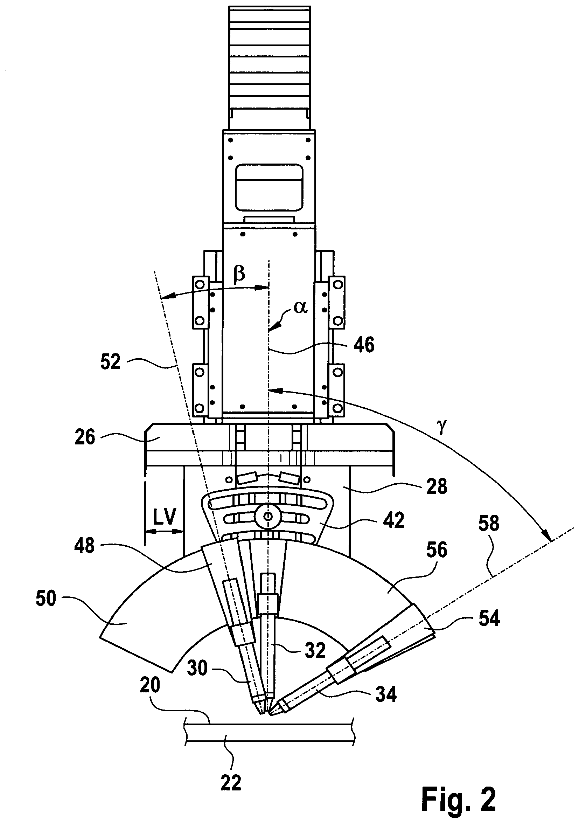

Fig. 2 zeigt eine Vorderansicht des Brenneraggregats 10. Der mittlere Plasma-Brenner 32 ist mittels der Kulisse 44 an dem Dreharm 18 befestigt und kann in einen Winkel α ± 15° bezogen auf die Drehachse 16 manuell verstellt werden. Der vorlaufende Plasma-Brenner 30 kann, bezogen auf den mittleren Plasma-Brenner 32, in einem Winkel β in einem Bereich 15° ≤ β ≤ 55° eingestellt werden. Des Weiteren kann der nachlaufende Plasma-Brenner 34 bezogen auf die Längsachse 46 des mittleren Plasma-Brenners 32, in einem Winkel γ verstellt werden, wobei der Winkel γ im Bereich von 15° ≤ γ ≤ 55° einstellbar ist.

Im dargestellten Ausführungsbeispiel fluchtet die Längsachse 46 des mittleren Plasma-Brenners 32 mit der Drehachse 16 der Hohlwelle 18 und verläuft in Z-Richtung des Koordinatensystems.

Die vertikal verlaufenden Arme 27, 29 sind - bezogen auf den horizontal verlaufenden Arm - lateral jeweils um eine Distanz LV mit 0 ≤ LV ≤ 80 mm verstellbar angeordnet.

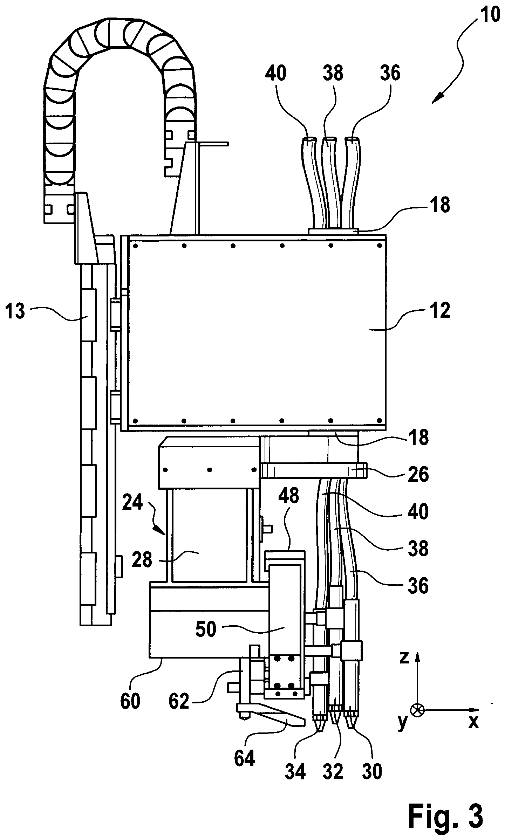

Fig. 3 zeigt eine Seitenansicht des Brenneraggregats 10, der zu entnehmen ist, dass die Plasma-Brenner 30, 32, 34 jeweils in unterschiedlichen Z-Y-Ebenen angeordnet sind, wenn ein Lateralwert gefahren wird. Bei "0"-Lateral schneiden die Mittelachsen aller Plasma-Brenner 30, 32, 34 die X-Achse. Des Weiteren geht von einer Unterseite 60 des Dreharms 24 eine integrierte Höhenabtastung 62 aus, die mit einem Ausleger 64 auf der Oberfläche 20 des Werkstücks 22 aufliegt.

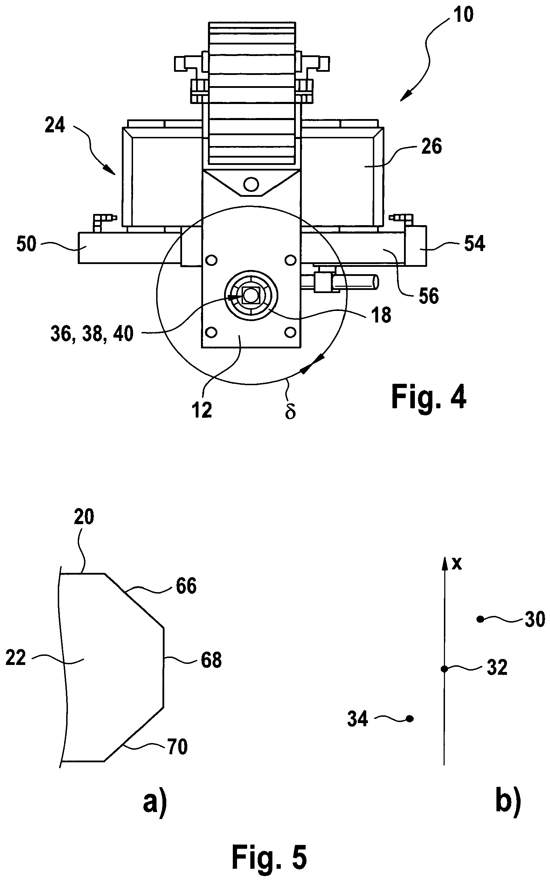

Fig. 4 zeigt eine Draufsicht des Brenneraggregats 10. Der Dreharm 24 ist um einen Winkel δ im Bereich von -450° ≤ δ ≤ +450° verdrehbar, wobei die Drehung mittels einer Maschinensteuerung überwacht wird.

In einer Stellung δ = 0° sind die Schlauchpakete 36, 38, 40 derart in der Hohlachse 16 angeordnet, dass diese nicht zueinander verdrillt sind. Des Weiteren weisen die Schlauchpakete 36, 38, 40 jeweils eine Länge derart auf, dass eine Drehung des Dreharms 24 aus der Null-Stellung um δ = +450° bzw. δ = -450° ermöglicht wird, ohne die Schlauchpakete 36, 38, 40 zu zerstören.

In der dargestellten Ausführungsform weist die Hohlwelle 18 einen Durchmesser D_{A} im Bereich von ca. 80 mm auf, wobei ein Schlauchpaket 36, 38, 40 jeweils einen Durchmesser D_{S} von ca. 30 mm aufweist, so dass ein Gesamtdurchmesser der Schlauchpakete etwa 70 mm umfasst und reibungsfrei in der Hohlwelle aufgenommen ist. Ferner erstreckt sich die Hohlwelle 18 über eine Länge L von ca. 500 mm. Um eine Verdrillung der Schlauchpakete zu ermöglichen, verlaufen diese in der Hohlwelle 18 und/oder in einer Länge im Bereich von 500 bis 600 mm außerhalb der Hohlwelle 18 frei.

Des Weiteren ist vorgesehen, dass die Schlauchpakete zumindest im Verlauf der Hohlwelle jeweils eine schlauchförmige HF-Abschirmung aufweisen, um beim Zünden der Plasma-Brenner eine Beeinflussung der Steuerelektronik auszuschließen. Das vorliegende Ausführungsbeispiel bezieht sich auf Plasma-Brenner mit einer Stromstärke von 100 A zum Schneiden von Werkstücken, wie beispielsweise Gasrohren mit einer Wandstärke von ca. 20 mm.

Zusammenfassend ist anzumerken, dass sich das erfindungsgemäße Brenneraggregat 10 gegenüber dem Stand der Technik dadurch auszeichnet, dass dieses drei Plasma-Brenner aufweist, die in verschiedenen Ebenen angeordnet und zueinander winkelverstellbar sind. Die Schlauchpakete 36, 38, 40 der Plasma-Brenner 30, 32, 34 werden dabei durch die in dem Ausleger 12 drehbar gelagerte Hohlwelle 18 geführt und mit einer Schneidanlage (nicht dargestellt) verbunden. Die Hohlwelle 18 begrenzt die Gesamtverdrehung δ auf ± 450° bzw. ±350°, wodurch sich die drei Schlauchpakete 36, 38, 40 in beiden Drehrichtungen ohne Zerstörung verdrillen können.

Mit den drei gegeneinander versetzten und bezogen auf das Werkstück winkelverstellbaren einnehmenden Plasma-Brennern 30, 32, 34 besteht die Möglichkeit, gleichzeitig, d. h. in einem Schnitt eine X-, Y-, K- oder V-Naht in ein Werkstück wie Blech einzubringen. Nach dem Stand der Technik müssen die unterschiedlichen Winkel einer derartigen Naht nacheinander eingeschnitten werden, was mit großem Zeitaufwand verbunden ist.

Ein weiterer Vorteil gegenüber dem Stand der Technik besteht darin, dass beim Plasmaschneiden aufgrund hoher Energien des Plasmastrahls Schnittgeschwindigkeiten je nach Materialdicke von bis zu 1200 mm/min bis 1600 mm/min realisierbar sind.

Mittels der Höhenabtastung 62, 64 werden die Plasma-Brenner 30, 32, 34 auf Schneidhöhe eingestellt. Dadurch können auch Plasma-Brenner ohne Lichtbogen-Abstandreglungen verwendet werden.

Als weiterer Vorteil ist zu erwähnen, dass die geschnittene Oberfläche im Vergleich zu Schnitten mit Autogen-Brennern eine sehr geringe Rauhtiefe und eine sehr geringe Aushärtung aufweist.

Als weiterer Vorteil ist zu erwähnen, dass keine oder nur geringe Schneidschlacke bzw. Brennschlacke entsteht.

Durch die motorisch in ihren Winkeln β, λ verstellbaren vorlaufenden bzw. nachlaufenden Plasma-Brennern 30, 32 und die motorisch links und rechts verfahrbaren bogenförmigen Winkelstelleinrichtungen ist über eine Steuerung wie CNC-Steuerung und ein Programm ein vorbestimmtes Schnittbild, d. h. eine Nahtkontur wie X-, Y-, V- oder K-Naht möglich. Diese Schnittkanten folgen über die Achse 16 des Plasma-Drehaggregates der Schneidkontur. Es ist auch möglich, während des Schneidprozesses die Phasen zu interpolieren, d. h., ohne Unterbrechung des Schneidvorgangs zu verändern, um z. B. bei Rohrdurchdringungen eine interpolierend verlaufende Phase zu schneiden.

Da beim Einstechen ins Material der Schneidstrahl möglichst senkrecht erfolgen muss, stehen die Plasma-Brenner in einer 15° Null-Position. Beginnt der Stechvorgang, fahren die Plasma-Brenner während der Vorwärtsbewegung, d. h. Schneidrichtung in die vorgegebene, programmierte Endposition. Systembedingt können alle Standardparameter und Schlauchpakete benutzt werden. Es müssen keine speziellen konstruierten Plasma-Brenner verwendet werden.

Fig. 5 zeigt die Kontur einer K-Naht sowie eine schematische Darstellung der Plasma-Brenner 30, 32, 34 in Schneidrichtung, die der X-Richtung entspricht. Der erste, vorlaufende Plasma-Brenner 30 erzeugt bei einer K-Naht den ersten Schnitt, der mit 66 bezeichnet ist. Danach folgt der im Drehzentrum montierte mittlere Plasma-Brenner 32, der einen senkrechten Schnitt 68 erzeugt. Der dritte, nachlaufende Plasma-Brenner 34 läuft versetzt hinter dem mittleren Plasma-Brenner 32 und erzeugt einen Schnitt 70.

Derartige Konturen müssen nach dem Stand der Technik mit nur einem Plasma-Brenner geschnitten werden, was bedeutet, dass bei einer K-Naht die Kontur dreimal, bei einer Y- und X-Naht die Kontur zweimal geschnitten werden muss.

Als weitere Besonderheit ist zu erwähnen, dass alle Plasma-Brenner auf einer motorischen Drehachse 16 montiert sind, wodurch die Schneidgeometrie der jeweiligen Schneidkontur Radien, Kreise usw. folgt.

## Patentansprüche

1. Mehrfach-Plasma-Brenneraggregat (10) zur Herstellung eines Kontur- bzw. Fasenschnittes, umfassend eine Brennerhaltung (14) mit einem mittleren Plasma-Brenner (32), einem vorlaufenden Plasma-Brenner (30) und einem nachlaufenden Plasma-Brenner (34), wobei die Plasma-Brenner (30, 32, 34) mit jeweils einem Schlauchpaket (36, 38, 40) verbunden und gleichzeitig betreibbar sind und wobei die Plasma-Brenner (30, 32, 34) mit der Brennerhalterung (14) derart verbunden sind, dass ihre Längsachsen (46, 52, 58) jeweils in einem Winkel α, β, γ zu einer Werkstückoberfläche (20) eines Werkstücks (22) einstellbar sind, wobei die Brennerhalterung (14) an einem höhenverstellbaren Ausleger (12) exzentrisch um eine Drehachse (16) drehbar angeordnet ist, **dadurch gekennzeichnet, dass** die drehbare Anordnung mittels einer Hohlwelle (18) erfolgt, dass der vorlaufende Plasma-Brenner (30) sowie der nachlaufende Plasma-Brenner (34) jeweils auf einem motorisch verfahrbaren Laufwagen (48, 54) jeweils auf einer bogenförmigen Winkelstelleinrichtung (50, 56) zur programmgesteuerten Einstellung der Winkel β, γ mittels einer Steuerung während des Schneidvorgangs verfahrbar angeordnet sind und dass die einzelnen Schlauchpakete (36, 38, 40) durch die entlang der Drehachse (16) in dem Ausleger (12) verlaufende Hohlwelle (18) verdrillbar aufgenommen sind.

2. Brenneraggregat nach Anspruch 1,
**dadurch gekennzeichnet,**
**dass** die Brennerhalterung (14) mittels der Hohlwelle (18) um einen Winkel δ verdrehbar ist, der im Bereich von -450° ≤ δ ≤ +450° liegt.

3. Brenneraggregat nach Anspruch 1 oder 2,
**dadurch gekennzeichnet,**
**dass** die Schlauchpakete (36, 38, 40) an einem oberen Ende mit der Hohlwelle (18) verbunden sind.

4. Brenneraggregat nach zumindest einem der vorherigen Ansprüche,
**dadurch gekennzeichnet,**
**dass** die Schlauchpakete (36, 38, 40) nach Verlassen der Hohlwelle (18) in einer Distanz von vorzugsweise 500 mm bis 600 mm frei verlaufen bzw. nicht fixiert sind.

5. Brenneraggregat nach zumindest einem der vorherigen Ansprüche,
**dadurch gekennzeichnet,**
**dass** die einzelnen Schlauchpakete (36, 38, 40) jeweils zumindest im Verlauf der Hohlwelle (18) eine vorzugsweise schlauchförmige Hochfrequenz-Abschirmung aufweisen.

6. Brenneraggregat nach zumindest einem der vorherigen Ansprüche,
**dadurch gekennzeichnet,**
**dass** der motorisch einstellbare Winkel β zwischen der Längsachse (52) des vorlaufenden Plasma-Brenners (30) und der Längsachse (46) des mittleren Plasma-Brenners (32) bzw. der Drehachse (16) in einem Bereich von 15° ≤ β ≤ 55° liegt.

7. Brenneraggregat nach zumindest einem der vorherigen Ansprüche,
**dadurch gekennzeichnet,**
**dass** der motorisch einstellbare Winkel γ zwischen der Längsachse (58) des nachlaufenden Plasma-Brenners (34) und der Längsachse (46) des mittleren Plasma-Brenners (32) bzw. der Drehachse (16) in einem Bereich von 15° ≤ γ ≤ 55° liegt.

8. Brenneraggregat nach zumindest einem der vorherigen Ansprüche,
**dadurch gekennzeichnet,**
**dass** der mittlere Plasma-Brenner (32) mittels einer Kulisse (42) an der Brennerhalterung (14) montiert ist und dass der Winkel α im Bereich von -15° ≤ α ≤ +15° zur Drehachse (16) einstellbar ist.

9. Brenneraggregat nach zumindest einem der vorherigen Ansprüche,
**dadurch gekennzeichnet,**
**dass** die Längsachse (46) des mittleren Plasma-Brenners (32) mit der Drehachse (16) fluchtet.

10. Brenneraggregat nach zumindest einem der vorhergehenden Ansprüche,
**dadurch gekennzeichnet,**
**dass** die Plasma-Brenner (30, 32, 34), bezogen auf ein mit der Brennerhalterung (14) gekoppeltes X-Y-Z-Koordinatensystem, wobei die Z-Richtung der Drehachse (16) entspricht, in X-Richtung in verschiedene Z-Y-Ebenen sowie in Y-Richtung einstellbar sind.

11. Brenneraggregat nach zumindest einem der vorherigen Ansprüche,
**dadurch gekennzeichnet,**
**dass** an der Brennerhalterung (14) eine Höhenabtastung (62, 64) angeordnet ist.

12. Verfahren zur Herstellung eines Kontur- bzw. Fasenschnittes wie K-, Y- oder X-Schnitt mittels eines Mehrfach-Plasma-Brenneraggregats, wobei das Mehrfach-Plasma-Brenneraggregat eine Brennerhalterung (14) mit einem mittleren Plasma-Brenner (32), einem vorlaufenden Plasma-Brenner (30) und einem nachlaufenden Plasma-Brenner (34) aufweist, wobei die Plasma-Brenner (30, 32, 34) mit jeweils einem Schlauchpaket (36, 38, 40) verbunden sind und gleichzeitig betrieben werden und wobei die Plasma-Brenner (30, 32, 34) in einem Winkel β, γ zu einer Werkstücksoberfläche eines Werkstücks einstellbar sind, wobei der Winkel β, γ des vorlaufenden Plasma-Brenners (32) bzw. nachlaufenden Plasma-Brenners (34) zur Einstellung einer vorbestimmten Nahtkontur eingestellt wird,
**dadurch gekennzeichnet,**
**dass** der Winkel β, γ des vorlaufenden Plasma-Brenners (30) sowie des nachlaufenden Plasma-Brenners (34) jeweils mittels eines motorisch verfahrbaren Laufwagens (48, 54) jeweils auf einer bogenförmigen Winkelstelleinrichtung (50, 56) mittels einer Steuerung programmgesteuert motorisch ohne Unterbrechung des Schneidvorgangs eingestellt wird und dass die einzelnen Schlauchpakete (36, 38, 40) in der entlang Drehachse (16) in dem Ausleger (12) verlaufende Hohlwelle (18) verdrillt werden.

## Claims

1. Multiple plasma burner unit (10) for making a contour cut or bevel cut, comprising a burner holder (14) with a middle plasma burner (32), a leading plasma burner (30) and a trailing plasma burner (34), said plasma burners (30, 32, 34) being connected to hose assemblies (36, 38, 40) respectively and operable simultaneously, and said plasma burners (30, 32, 34) being connected to the burner holder (14) such that their longitudinal axes (46, 52, 58) are settable at angles α, β, γ respectively to a workpiece surface (20) of a workpiece (22), said burner holder (14) being rotatably arranged on a height-adjustable arm (12) eccentrically about a rotary axis (16),
**wherein**
the rotatable arrangement is achieved by means of a hollow shaft (18), said leading plasma burner (30) and said trailing plasma burner (34) are movably arranged on motor-driven carriages (48, 54) respectively on arc-shaped angle setting devices (50, 56) respectively for program-controlled setting of said angles β, γ by means of a control unit during the cutting operation, and said individual hose assemblies (36, 38, 40) are twistably held by said hollow shaft (18) running along said rotary axis (16) inside said arm (12).

2. Burner unit according to claim 1,
**wherein**
the burner holder (14) is rotatable by means of the hollow shaft (18) by an angle δ, which is in the range -450° ≤ δ ≤ +450°.

3. Burner unit according to claim 1 or 2,
**wherein**
the hose assemblies (36, 38, 40) are connected at an upper end to the hollow shaft (18).

4. Burner unit according to at least one of the preceding claims,
**wherein**
the hose assemblies (36, 38, 40) run freely or are unfixed after exiting the hollow shaft (18) for a distance of preferably 500 mm to 600 mm.

5. Burner unit according to at least one of the preceding claims,
**wherein**
the individual hose assemblies (36, 38, 40) each have preferably hose-like highfrequency shielding at least over the extent of the hollow shaft (18).

6. Burner unit according to at least one of the preceding claims,
**wherein**
the motor-settable angle β between the longitudinal axis (52) of the leading second plasma burner (30) and the longitudinal axis (46) of the middle plasma burner (32) or the rotary axis (16) is in a range 15° ≤ β ≤ 55°.

7. Burner unit according to at least one of the preceding claims,
**wherein**
the motor-settable angle γ between the longitudinal axis (58) of the trailing plasma burner (34) and the longitudinal axis (46) of the middle plasma burner (32) or the rotary axis (16) is in a range 15° ≤ γ ≤ 55°.

8. Burner unit according to at least one of the preceding claims,
**wherein**
the middle plasma burner (32) is mounted by means of a slotted link (42) on the burner holder (14), and the angle α is settable in the range -15° ≤ α ≤ +15° relative to the rotary axis (16).

9. Burner unit according to at least one of the preceding claims,
**wherein**
the longitudinal axis (46) of the middle plasma burner (32) is aligned with the rotary axis (16).

10. Burner unit according to at least one of the preceding claims,
**wherein**
the plasma burners (30, 32, 34) are settable in the X direction, in various Z-Y planes and in the Y direction, relative to an X-Y-Z coordinate system linked to the burner holder (14) with the Z direction corresponding to the rotary axis (16).

11. Burner unit according to at least one of the preceding claims,
**wherein**
a height scanner (62, 64) is arranged on the burner holder (14).

12. Method for making a contour cut or bevel cut such as a K, Y or X cut by means of a multiple plasma burner unit, said multiple plasma burner unit having a burner holder (14) with a middle plasma burner (32), a leading plasma burner (30) and a trailing plasma burner, said plasma burners (30, 32, 34) being connected to hose assemblies (36, 38, 40) respectively and operable simultaneously, and said plasma burners (30, 32, 34) being settable at angles β, γ respectively to a workpiece surface of a workpiece, said angles β, γ of said leading plasma burner (32) and said trailing plasma burner (34) respectively being set in order to set a predetermined weld contour,
**wherein**
said angles β, γ of said leading plasma burner (30) and of said trailing plasma burner (34) respectively are set by means of motor-driven carriages (48, 54) respectively on arc-shaped angle setting devices (50, 56) respectively by means of a control unit under program control by motor power without interruption of the cutting operation, and said individual hose assemblies (36, 38, 40) are twisted in the hollow shaft (18) running along the rotary axis (16) inside the arm (12).

## Revendications

1. Unité multi-torches à plasma (10) pour la réalisation d'une découpe de contours ou d'un chanfrein, comprenant un porte-torches (14) avec une torche à plasma médiane (32), une torche à plasma antérieure (30) et une torche à plasma postérieure (34), sachant que les torches à plasma (30, 32, 34) sont reliées chacune à un faisceau de tuyaux (36, 38, 40) et peuvent fonctionner simultanément et sachant que les torches à plasma (30, 32, 34) sont reliées au porte-torches (14) de telle sorte que leurs axes longitudinaux (46, 52, 58) sont chacun réglables dans un angle α, β, γ par rapport à la surface (20) d'une pièce d'oeuvre (22), sachant que le porte-torches (14) est disposé sur un bras (12) réglable en hauteur, pouvant tourner de manière excentrique autour d'un axe de rotation (16).
**caractérisée en ce,**
**que** le dispositif rotatif est réalisé au moyen d'un arbre creux (18), que la torche à plasma antérieure (30) ainsi que la torche à plasma postérieure (34) sont disposées respectivement sur un chariot mobile mu par un moteur (48, 54) sur un dispositif arqué de réglage angulaire (50, 56) pour le réglage à cycles programmés des angles β, γ au moyen d'une commande de manière à pouvoir être déplacées pendant le processus de coupe et que les différents faisceaux de tuyaux (36, 38, 40) sont passés à travers l'arbre creux (18) s'étendant dans le bras (12) le long de l'axe de rotation (16) en pouvant être torsadés.

2. Unité de torches selon la revendication 1,
**caractérisée en ce**
**que** le porte-torches (14) peut être tourné d'un angle δ au moyen de l'arbre creux (18), lequel angle se situant entre -450° ≤ δ ≤ +450°.

3. Unité de torches selon la revendication 1 ou 2,
**caractérisée en ce**
**que** les faisceaux de tuyaux (36, 38, 40) sont reliés à l'arbre creux (18) au niveau de leur extrémité supérieure.

4. Unité de torches selon au moins une des revendications précédentes,
**caractérisée en ce**
**que** les faisceaux de tuyaux (36, 38, 40) une fois sortis de l'arbre creux (18) s'étendent librement, c'est-à-dire ne sont pas fixés sur une distance comprise de préférence entre 500 mm et 600 mm.

5. Unité de torches selon au moins une des revendications précédentes,
**caractérisée en ce**
**que** les différents faisceaux de tuyaux (36, 38, 40), présentent chacun au moins lors de la traversée de l'arbre creux (18), un blindage haute fréquence de préférence en forme de tuyau flexible.

6. Unité de torches selon au moins une des revendications précédentes,
**caractérisée en ce**
**que** l'angle β réglable par moteur entre l'axe longitudinal (52) de la deuxième torche à plasma antérieure (30) et l'axe longitudinal (46) de la torche à plasma médiane (32) ou de l'axe de rotation (16) est compris dans une plage se situant entre 15° ≤ β ≤ 55°.

7. Unité de torches selon au moins une des revendications précédentes,
**caractérisée en ce**
**que** l'angle γ réglable par moteur entre l'axe longitudinal (58) de la torche à plasma postérieure (34) et l'axe longitudinal (46) de la torche à plasma médiane (32) ou de l'axe de rotation (16) est compris dans une plage se situant entre 15° ≤ γ ≤ 55°.

8. Unité de torches selon au moins une des revendications précédentes,
**caractérisée en ce**
**que** la torche à plasma médiane (32) est montée sur le porte-torches (14) au moyen d'une coulisse (42) et que l'angle α est réglable par rapport à l'axe de rotation (16) dans une plage se situant entre -15° ≤ α ≤ +15°.

9. Unité de torches selon au moins une des revendications précédentes,
**caractérisée en ce**
**que** l'axe longitudinal (46) de la torche à plasma médiane (32) est aligné avec l'axe de rotation (16).

10. Unité de torches selon au moins une des revendications précédentes,
**caractérisée en ce**
**que** les torches à plasma (30, 32, 34) sont réglables sur l'axe X dans différents plans Z-Y ainsi que sur l'axe Y, en se référant à un système de coordonnées X-Y-Z associé au porte-torches (14), sachant que l'axe Z correspond à l'axe de rotation (16).

11. Unité de torches selon au moins une des revendications précédentes,
**caractérisée en ce**
**qu'**un détecteur de hauteur (62, 64) est disposé sur le porte-torches (14).

12. Procédé pour la réalisation d'une découpe de contours ou d'un chanfrein, telle une coupe en forme de K, Y ou X, au moyen d'une unité multi-torches à plasma, sachant que l'unité multi-torches à plasma présente un porte-torches (14) avec une torche à plasma médiane (32), une torche à plasma antérieure (30) et une torche à plasma postérieure, sachant que les torches à plasma (30, 32, 34) sont reliées chacune à un faisceau de tuyaux (36, 38, 40) et fonctionnent simultanément et sachant que les torches à plasma (30, 32, 34) sont réglables dans des angles β, γ par rapport à la surface d'une pièce d'oeuvre, sachant que les angles β, γ de la torche à plasma antérieure (32) et de la torche à plasma postérieure (34) sont respectivement réglés pour obtenir un contour de coupage prédéfini,
**caractérisé en ce**
**que** lesdits angles β, γ de la torche à plasma antérieure (30) et de la torche à plasma postérieure (34) sont réglés par moteur, chacun au moyen d'un chariot mobile mu par un moteur (48, 54) sur un dispositif arqué de réglage angulaire (50, 56) au moyen d'une commande à cycles programmés sans interruption du processus de coupe et que les différents faisceaux de tuyaux (36, 38, 40) sont torsadés dans l'arbre creux (18) s'étendant dans le bras (12) le long de l'axe de rotation (16).
